# EUROPEAN PATENT APPLICATION

(11) **EP 3 536 821 A1**
(43) Date of publication of application: **11.09.2019**
(21) Application number: 17868189.6
(22) Date of filing: 12.09.2017
(51) Int. Cl.: C23C 18/24, C09K 13/04, C23C 18/28

(54) **METHOD FOR TREATING PLASTIC SURFACE**

(30) Priority: 01.11.2016 JP 2016214279
(71) Applicant: Kurita Water Industries Ltd., Nakano-ku, Tokyo 164-0001 (JP)
(72) Inventor: NAGAI Tatsuo, Tokyo 164-0001 (JP); YAMAMOTO Yuzuki, Tokyo 164-0001 (JP)
(74) Representative: Lahrtz, Fritz
(86) International application number: PCT/JP2017/032786
(87) International publication number: WO 2018/083884

(57) **Abstract**

A treatment device 1 has a treatment tank 2 on the outside of which a constant temperature heater 3 is provided and a supply tank 6 connected via a pipe 4 and a pump 5. Persulfuric acid salt solutions S and S1 of prescribed sulfuric acid concentrations and persulfuric acid concentrations are respectively filled in the treatment tank 2 and the supply tank 6. In the treatment tank 2, a plastic sheet 7 is suspended vertically as plastic to be treated. The sulfuric acid concentrations of the persulfuric acid salt solutions S and S1 are 50-92 wt%. The persulfuric acid concentrations of the solutions S and S1 after dissolving the persulfuric acid salt are 3-20 g/L. With the method for treating a Cr-free plastic surface that uses said treatment device 1, it is possible to form metal plating that adheres well to the plastic surface.

## Description

### [Technical Field]

The present invention relates to a method for treating a plastic surface that is carried out prior to metallization of a plastic (resin molded article) surface.

### [Background Art]

At parts where metals are used as structural materials or component materials, plastics have substituted for metals utilizing their advantages such as weight reduction, cost reduction, freedom of shape and ease of mass production. At present, plastics are widely used not only for decoration but also for automotive exterior and interior trim parts, household appliances, and the like. In these uses, plastic surfaces are often subjected to plating in order to improve rigidity, abrasion resistance, weathering resistance, heat resistance, and so on.

Since plastics are nonconductive, a metal film that becomes a conductor needs to be formed on plastic first when plating is carried out. The techniques therefor are roughly classified into dry process such as CVD or PVD and wet process of electroless nickel plating. In dry processes, most of film formation is carried out in a vacuum state, and they are unsuitable for application to mass production and large components, so that the wet process has been adopted so far.

Of such plastic molded articles, molded articles of an ABS resin or a PEEK resin are considered to be difficult to pretreat, and as the pretreatment for electroless plating of them, a surface roughening treatment with sulfuric acid-chromic acid is carried out. Chromic acid is represented by the chemical formula: H₂CrO₄, and in an etching solution that is a mixed solution of chromic acid and concentrated sulfuric acid, an equilibrium of

2CrO₄²⁻ + 2H₃O⁺ → Cr₂O₇²⁻ + 3H₂O

is present, but Cr is hexavalent in any case. Although hexavalent Cr is subject to the REACH regulation and the RoHS regulation, hexavalent Cr does not remain in products, and therefore the products themselves are not subject to regulations; however, the wastewater given after the surface roughening treatment with sulfuric acid-chromic acid contains harmful chromium. On this account, the wastewater containing chromium needs to be subjected to wastewater treatments such as reduction, neutralization and coagulation/sedimentation, and besides, a problem is that sediment cannot be easily disposed of because it also contains chromium.

Then, as an environmentally friendly technique that substitutes for chromic acid, etching with a mixed solution of permanganate and an inorganic salt is proposed in Patent Document 1. In Patent Document 2 and Patent Document 3, a pretreatment method for electroless plating, the pretreatment method comprising roughening a surface of a plastic molded article using ozone dissolved water, is disclosed.

### [Prior Art Document]

### [Patent Document]

[Patent Document 1] JP2008-31513A
[Patent Document 2] JP2002-121678A
[Patent Document 3] JP2012-52214A

### [Summary of the Invention]

### [Problems to be solved by the Invention]

In the method of Patent Document 1, however, a problem is that it is difficult to carry out a surface treatment of a PEEK resin or an ABS resin by this method, and adhesion to metals is not good. In the method for treating a plastic surface described in Patent Document 2 and Patent Document 3, a problem is that ozone water of high concentration has to be produced and high concentration has to be maintained due to the high decomposition rate of ozone, and thus not only are large facilities necessary, but also uneven treatment is liable to occur because of a local difference in ozone concentration.

The present invention has been made in the light of the above problems, and it is an object of the present invention to provide a Cr-free method for treating a plastic surface which makes it possible to form a plating film that sufficiently adheres to a plastic surface.

### [Means for solving the Problems]

To achieve the above object, the present invention provides a method for treating a plastic surface comprising treating plastic with a solution containing a persulfate dissolved therein, the solution having a sulfuric acid concentration of 50 to 92 wt% and a persulfuric acid concentration of 3 to 20 g/L (Invention 1).

According to the above invention (Invention 1), hydrophilic functional groups are exposed on the plastic surface owing to the strong oxidative effect of persulfuric acid, and therefore, by subjecting the plastic given after this treatment to a plating treatment, a plating film that sufficiently adheres to the plastic can be obtained.

In the above invention (Invention 1), a mixed solution containing an inorganic salt dissolved therein can be used as the solution containing a persulfate dissolved therein (Invention 2).

According to the above invention (Invention 2), the degree of the plastic surface treatment can be controlled.

In the above inventions (Inventions 1, 2), the treatment temperature is preferably 50 to 140°C (Invention 3) .

According to the above invention (Invention 3), the plastic surface can be preferably roughened while decomposition of persulfuric acid is suppressed.

In the above inventions (Inventions 1 to 3), it is preferable that, by using a treatment equipment comprising a treatment tank for storing the solution containing a persulfate dissolved therein and a persulfate solution storage tank for supplying the solution containing a persulfate dissolved therein to the treatment tank, plastic be immersed in the treatment tank to thereby treat a surface of the plastic (Invention 4).

According to the above invention (Invention 4), the treatment can be carried out by simply immersing plastic in the treatment tank in which the persulfate solution is stored. If the concentration of the persulfuric acid lowers, the persulfate solution is supplied from the persulfate solution storage tank, whereby the treatment ability can be maintained.

### [Effect of the Invention]

According to the method for treating a plastic surface of the present invention, hydrophilic functional groups are exposed on the plastic surface owing to the strong oxidative effect of persulfuric acid, and therefore, by subjecting the plastic given after this treatment to a plating treatment, a plating film that sufficiently adheres to the plastic can be obtained.

### [Brief Description of Drawing]

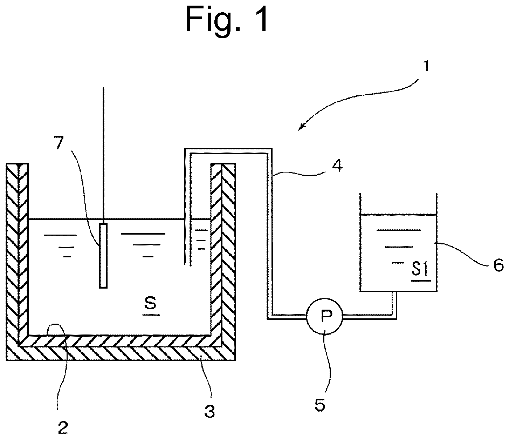

Figure 1 is a schematic view showing treatment equipment to which the method for treating a plastic surface according to an embodiment of the present invention can be applied.

### [Embodiments for Carrying out the Invention]

Figure 1 shows treatment equipment to which the method for treating a plastic surface according to an embodiment of the present invention can be applied. Referring to Figure 1, the treatment equipment 1 has a treatment tank 2 provided with a thermostatic heater 3 on its outer periphery and a supply tank 6 connected through a pipe 4 and a pump 5. In the treatment tank 2, a stirring means to stir the interior of the tank, such as an air diffusion tube, may be provided, when needed. To the supply tank 6, supply means for a persulfate and sulfuric acid, which are not shown in the figure, are connected, and a persulfate solution S1 can be prepared and supplied to the treatment tank 2, when needed.

In such treatment equipment 1, the supply tank 6 is filled with a persulfate solution S1 having predetermined sulfuric acid concentration and persulfuric acid concentration, and by supplying the persulfate solution S1 from the supply tank 6, the treatment tank 2 is filled with the persulfate solution S having predetermined concentrations. In the treatment tank 2, a plastic plate 7 is vertically hung as plastic to be treated.

Examples of plastics to form the plastic plate 7 that becomes a treatment object in the present embodiment include, but are not limited to, hard-to-etch plastics that are difficult to etch unless a chromic acid-sulfuric acid solution is used, such as acrylonitrile/butadiene/styrene (ABS) resin, polyether ether ketone (PEEK) resin, polyethylene naphthalate (PEN) resin, polyethylene terephthalate (PET) resin and polyphenylene sulfide (PPS) resin.

In the present embodiment, the persulfate used for the persulfate solutions S and S1 only needs to be one that forms peroxomonosulfate and/or peroxodisulfate when it is in the form of a solution, and monosulfates or disulfates, such as sodium persulfate, potassium persulfate and ammonium persulfate, can be used. Of these, sodium persulfate is preferable. To the persulfate solutions S and S1, phosphates, sulfates and other inorganic salts such as sodium chloride can be appropriately added.

The sulfuric acid concentrations of the persulfate solutions S and S1 are each 50 to 92 wt%. If the sulfuric acid concentration is less than 50 wt%, a sufficient effect of improvement in plating adhesion is not obtained, and on the other hand, even if it exceeds 92 wt%, improvement of the above effect is not obtained, and besides plating adhesion is rather deteriorated. In particular, a sulfuric acid concentration of 70 to 85 wt% is preferable because the above effect is remarkable. The persulfuric acid concentrations of the solutions S and S1 are each 3 to 20 g/L after the persulfate is dissolved. If the persulfuric acid concentration is less than 3 g/L, a sufficient effect of improvement in plating adhesion is not obtained, and on the other hand, even if it exceeds 20 g/L, not only isn't improvement of the above effect obtained, but also such a concentration is not economical. In particular, a persulfuric acid concentration of 3 to 10 g/L is preferable.

Next, a method for treating a plastic surface using such treatment equipment 1 as described above will be described. First, a plastic plate 7 is degreased, and thereafter, this plastic plate 7 is immersed in the treatment tank 2 containing the persulfate solution S, whereby a surface of the plastic plate 7 is treated.

At this time, it is preferable to heat the treatment tank 2 with the thermostatic heater 3 to maintain the temperature of the persulfate solution S at not lower than 80°C, for example, 80 to 140°C, particularly 80 to 130°C. This treatment temperature may be appropriately set according to the material of the plastic plate 7 or the sulfuric acid concentration and the persulfuric acid concentration of the persulfate solution S.

By the immersion in the persulfate solution S for 1 to 20 minutes, particularly 1 to 10 minutes, hydrophilic functional groups are exposed on the surface of the plastic plate 7. Owing to this, in the case of an ABS resin, a hydroxyl group, a carbonyl group, an aldehyde group and a carboxyl group appear on the plastic surface. In the case of a PEEK resin, a hydroxyl group and a carboxyl group appear on the plastic surface. By virtue of them, plating adhesion can be enhanced in the subsequent plating treatment.

The plastic plate 7 having been taken out of the treatment tank 2 is subjected to washing with water and drying, and then subjected to a plating treatment. The plating treatment methods include autocatalytic electroless plating and non-autocatalytic electroless plating, and any of them is available. The metal used for plating may be any of nickel, copper, cobalt, alloys thereof, etc.

Such a treatment may be continuously carried out while the plastic plate 7 is renewed, but with the treatment, the sulfuric acid concentration of the persulfate solution S in the treatment tank 2 is decomposed, and therefore, the pump 5 may be started to thereby supply a fresh persulfate solution S1 to the treatment tank 2 from the supply tank 6 through the pipe 4.

The method for treating a plastic surface of the present invention is described hereinabove based on the above embodiment, but the present invention is not limited to the above embodiment and can be variously modified. For example, to the persulfate solutions S and S1, various inorganic salts can be added. To the plastic plate 7, plates of various resins can be applied. Moreover, not only a batch treatment as in the present embodiment but also a continuous treatment is possible. In addition, it is also possible to provide a persulfate aqueous solution in the supply tank 6 and to separately supply sulfuric acid to the treatment tank 2.

### [Examples]

The present invention will be more specifically described below with reference to Examples and Comparative Examples. However, the present invention is in no way limited to the description of them. In the following Examples and Comparative Examples, persulfuric acid concentration measurement and adhesion test were carried out in the following manner.

### <Persulfuric acid concentration measuring method>

First, the total concentration of oxidizing agents contained in the treatment solution (persulfate solution S) was measured by iodometric titration. This iodometric titration is a method in which KI is added to the persulfate solution S to liberate I₂, the I₂ is titrated with a sodium thiosulfate standard solution to determine the amount of I₂, and from the amount of I₂, the oxidizing agent concentration is determined. Next, only a hydrogen peroxide concentration of the persulfate solution S was determined by potassium permanganate titration, and by subtracting the potassium permanganate titration value from the iodometric titration value, a persulfuric acid concentration was determined.

### <Plating adhesion test>

On a surface, six cuts penetrating an ABS resin were made in both directions perpendicularly at intervals of 2 mm to form a lattice of 25 (5×5), then to the lattice, Cellotape (R) was strongly pressure bonded, then the end of the tape was peeled off at once at an angle of 45°, and the state of the lattice was compared with the illustrated examples. The test result was evaluated based on the following 6 classes of Class 0 to Class 5. Class 0: Any square of the lattice does not peel off. Class 1: At the intersections of the cuts, the coating film peels off small, but the peeled area ratio is less than 5%. Class 2: The coating film peels off along the cut lines and at the intersections, and the peeled area ratio is not less than 5% and less than 15%. Class 3: The coating film peels off partially or wholly along the cut lines, and the peeled area ratio is not less than 15% and less than 30%. Class 4: The coating film peels off partially or wholly largely along the cut lines, and the peeled area ratio is not less than 30% and less than 65%. Class 5: The peeled area ratio is not less than that of the Class 4. The cuts were made at three positions, and an overall determination of these three positions was made.

### [Example 1]

Using the equipment shown in Figure 1, a surface treatment of an ABS resin plate serving as the plastic plate 7 was carried out. The specification of the treatment tank and the conditions are as follows. As the persulfate, sodium persulfate was used.

### <Treatment tank>

Volume of treatment tank 2: 40 L
Size of ABS resin plate: 500 mm × 500 mm × thickness 5 mm

### <Properties of persulfate solution S and surface treatment conditions>

Sulfuric acid concentration: 75 wt%
Persulfuric acid concentration: 10 g/L
Treatment temperature: 70°C
Treatment time: 10 minutes

First, the persulfate solution S was placed in the treatment tank 2, the thermostatic heater 3 was operated, and when the solution temperature became 70°C, the ABS resin plate was immersed. After the immersion for 10 minutes, the resin plate was taken out of the treatment tank 2, washed with pure water and thereafter dried, and after the resin plate was subjected to a catalyst impartation step and an activation step, it was subjected to electroless nickel plating. The treatment conditions of each step are set forth in Table 1.

From this electroless nickel-plated plate, a sample of 150 mm × 100 mm was cut out, and a plating adhesion test was carried out by the aforesaid method.

**[Table 1]**

| Step name | Bath composition | Concentration | Treatment temperature (°C) | Treatment time (min) |
|---|---|---|---|---|
| Catalyst impart ation | hydrochloric acid | 100 mL/L | 60 | 10 |
| | tin chloride | 20 g/L | | |
| | palladium chloride | 0.2 g/L | | |
| Activation | sulfuric acid | 300 mL/L | 50 | 10 |
| Electroless nickel plating | TOP NICORON TOM-5 (trade name) | 200 mL/L | 60 | 10 |
| | Aqueous ammonia | adjusted to pH 8 | | |

### [Examples 2 to 4, Comparative Examples 1 to 4]

A test was carried out in the same manner as in Example 1, except that the surface treatment conditions were set as shown in Table 2. The results are set forth in Table 2. In Table 2, the result of Example 1 is also set forth.

**[Table 2]**

| Example No. | Sulfuric acid concentration (wt%) | Treatment temperature (°C) | Persulfuric acid concentration (g/L) | Treatment time (min) | Adhesion test result |
|---|---|---|---|---|---|
| Ex. 1 | 75 | 70 | 10 | 10 | Class 0 |
| Ex. 2 | 60 | 80 | 5 | 30 | Class 0 |
| Ex. 3 | 85 | 60 | 3 | 10 | Class 0 |
| Ex. 4 | 75 | 90 | 5 | 10 | Class 1 |
| Comp. Ex. 1 | 45 | 80 | 10 | 10 | Class 3 |
| Comp. Ex. 2 | 85 | 120 | 1 | 10 | Class 4 |
| Comp. Ex. 3 | 96 | 100 | 0 | 10 | Class 4 |
| Comp. Ex. 4 | 96 | 100 | 10 | 1 | Class 3 |

As is apparent from Table 2, it can be seen that according to the method for treating a plastic surface of the present invention, excellent plating adhesion was obtained.

### [Example 5]

Using the equipment shown in Figure 1, a surface treatment of a PEEK resin plate serving as the plastic plate 7 was carried out. The specification of the treatment tank and the conditions are as follows. As the persulfate, sodium persulfate was used.

### <Treatment tank>

Volume of treatment tank 2: 40 L
Size of PEEK resin plate: 500 mm × 500 mm × thickness 5 mm

### <Properties of persulfate solution S and surface treatment conditions>

Sulfuric acid concentration: 85 wt%
Persulfuric acid concentration: 10 g/L
Treatment temperature: 120°C
Treatment time: 1 minute

First, the persulfate solution S was placed in the treatment tank 2, the thermostatic heater 3 was operated, and when the solution temperature became 120°C, the PEEK resin plate was immersed. After the immersion for 1 minute, the resin plate was taken out of the treatment tank 2, washed with pure water and thereafter dried, and after the resin plate was subjected to a catalyst impartation step and an activation step, it was subjected to electroless nickel plating. The treatment conditions of each step are as shown in Table 1 (the same as in Example 1).

From this electroless nickel-plated plate, a sample of 150 mm × 100 mm was cut out, and a plating adhesion test was carried out by the aforesaid method.

### [Examples 6 to 8, Comparative Examples 5 to 8]

A test was carried out in the same manner as in Example 5, except that the surface treatment conditions were set as shown in Table 3. The results are set forth in Table 3. In Table 3, the result of Example 5 is also set forth.

**[Table 3]**

| Example No. | Sulfuric acid concentration (wt%) | Treatment temperature (°C) | Persulfuric acid concentration (g/L) | Treatment time (min) | Adhesion test result |
|---|---|---|---|---|---|
| Ex. 5 | 85 | 120 | 10 | 1 | Class 0 |
| Ex. 6 | 75 | 130 | 5 | 10 | Class 0 |
| Ex. 7 | 92 | 100 | 3 | 2 | Class 0 |
| Ex. 8 | 75 | 140 | 5 | 3 | Class 1 |
| Comp. Ex. 5 | 45 | 100 | 10 | 10 | Class 3 |
| Comp. Ex. 6 | 85 | 120 | 1 | 10 | Class 4 |
| Comp. Ex. 7 | 96 | 100 | 0 | 10 | Class 4 |
| Comp. Ex. 8 | 96 | 100 | 10 | 1 | Class 3 |

As is apparent from Table 3, it can be seen that according to the method for treating a plastic surface of the present invention, excellent plating adhesion was obtained.

### [Description of Reference Numerals]

- 1: Treatment equipment
- 2: Treatment tank
- 3: Thermostatic heater
- 4: Pipe
- 5: Pump
- 6: Supply tank
- 7: Plastic plate
- S, S1: Persulfate solution

## Claims

1. A method for treating a plastic surface comprising treating plastic with a solution containing a persulfate dissolved therein, the solution having a sulfuric acid concentration of 50 to 92 wt% and a persulfuric acid concentration of 3 to 20 g/L.

2. The method for treating a plastic surface according to claim 1, wherein a mixed solution containing an inorganic salt dissolved therein is used as the solution containing a persulfate dissolved therein.

3. The method for treating a plastic surface according to claim 1 or 2, wherein the treatment temperature is 50 to 140°C.

4. The method for treating a plastic surface according to any one of claims 1 to 3, comprising, by using a treatment equipment comprising a treatment tank for storing the solution containing a persulfate dissolved therein and a persulfate solution storage tank for supplying the solution containing a persulfate dissolved therein to the treatment tank, immersing plastic in the treatment tank to thereby treat a surface of the plastic.
